# EUROPÄISCHE PATENTSCHRIFT

(11) **EP 1 165 647 B1**
(45) Veröffentlichungstag und Bekanntmachung des Hinweises auf die Patenterteilung: **04.06.2003**
(21) Anmeldenummer: 00904848.9
(22) Anmeldetag: 20.01.2000
(51) Int. Cl.: C08G 59/68, C09J 163/00

(54) **EINKOMPONENTEN-KLEBSTOFF MIT ANPASSBARER FÜGEOFFENZEIT**
SINGLE COMPONENT ADHESIVE WITH AN ADAPTABLE OPEN JOINT TIME
ADHESIF MONOCOMPOSANT A TEMPS OUVERT ADAPTABLE

(30) Priorität: 28.01.1999 DE 19903354
(43) Veröffentlichungstag der Anmeldung: 02.01.2002
(73) Patentinhaber: SIEMENS AKTIENGESELLSCHAFT, 80333 München (DE)
(72) Erfinder: PLUNDRICH, Winfried, D-82110 Germering (DE); WIPFELDER, Ernst, D-81673 München (DE); HEIN, Peter, D-13629 Berlin (DE); WILCKE, Ralf, D-13351 Berlin (DE)
(86) Internationale Anmeldenummer: DE0000171
(87) Internationale Veröffentlichungsnummer: WO00044807

(56) Entgegenhaltungen:
- WO-A-98/33645
- DE-A- 4 340 949
- PATENT ABSTRACTS OF JAPAN vol. 1998, no. 14, 31. Dezember 1998 (1998-12-31) & JP 10 237156 A (SUMITOMO BAKELITE CO LTD), 8. September 1998 (1998-09-08)

## Beschreibung

Die Erfindung betrifft einen mit Siliconkautschuk elastifizierten einkomponentigen Epoxidharzklebstoff, dessen Fügeoffenzeit über die Art und Konzentration des Photoinitiators - und/oder die Dauer und/oder die Intensität der UV-Aktivierung an den jeweiligen Herstellungsprozeß, in dem er eingesetzt wird, anpaßbar ist. Dieser Klebstoff eignet sich bevorzugt für automatisierte Klebeverfahren und kann auch vorteilhaft für großflächige Fügeteile mit gegenläufigen thermischen Ausdehnungskoeffizienten eingesetzt werden. Er eignet sich z.B. für Verklebungen von Dauermagnetwerkstoffen, wie bei der Montage von Permanentmagneten auf Polblechen und/oder Massivpolen aus Stahl in permanenterregten Maschinen.

In vielen Bereichen der Technik werden Werkstücke bereits ausschließlich durch Verkleben verbunden oder befestigt. Verdrängt werden dadurch herkömmliche Befestigungsverfahren wie Schweißen, Löten, Schrauben oder dgl. Für die stetig wächsenden Einsatzbereiche sind Klebstoffe erforderlich, die den unterschiedlichsten Anforderungen genügen müssen.

Aus der DE 195 38 468 A1 ist ein einkomponentiger Klebstoff mit günstigem Eigenschaftsprofil bekannt, der jedoch aufgrund des hochreaktiven UV-Initiators keine technisch relevante Fügeoffenzeit ermöglicht und mangels elastifizierender Partikel auch für großflächige Verklebungen nicht geeignet ist.

Aufgabe der Erfindung ist es daher, einen Klebstoff und ein Verfahren zur Verklebung zur Verfügung zu stellen, mit dem technisch relevante Fügeoffenzeiten realisiert werden können und großflächige Verklebungen möglich sind.

Darüber hinaus werden immer mehr Klebstoffe gebraucht, die eine elastische Klebeverbindung bilden, insbesondere, wenn ein geklebter Verbund hergestellt wird, der über einen weiten Temperaturbereich thermisch stabil sein soll, weil bei der thermisch bedingten Ausdehnung oder Schrumpfung der Werkstükke die Klebeverbindung durch Elastizität Längenunterschiede ausgleichen sollte.

Gegenstand der Erfindung ist ein einkomponentiger Klebstoff, folgende Bestandteile umfassend:
A) 5 - 90 Gew% einer cycloaliphatischen Epoxidharzkomponente
B) 10 - 94 Gew% eines epoxifunktionellen Siliconkautschuks,
C) 0,05 bis 5 Gew% eines UV-Initiators auf Ferrocenbasis,
D) 0,1 - 5 Gew% eines thermischen Initiators,
E) 0,05 - 1,5 Gew% eines Haftvermittlers,
F) 0,1 - 10 Gew% einer hochdispersen Kieselsäure,
G) 0 - 3 Gew% Abstandshalter und
H) 0 - 70 Gew% Füllstoff.

Außerdem ist Gegenstand der Erfindung ein Verfahren zur flächigen Verklebung zweier Werkstücke, folgende Arbeitsschritte umfassend:
- Aufbringen einer Schicht eines Klebstoffs auf eines der beiden Werkstücke oder beide Werkstücke,
- Einstellung einer gewünschten Fügeoffenzeit des Klebstoffs durch, hinsichtlich ihrer Dauer und Intensität, gezielte UV-Bestrahlung und/oder Temperierung und/oder IR-Bestrahlung zur Positionsfixierung und
- Zusammenfügen der beiden Werkstücke,
- thermische Nachhärtung des Klebstoffs.

Eine definierte Fügeoffenzeit, die ein sicheres Positionieren der Werkstücke gewährleistet, wird ermöglicht durch die Art und Konzentration des Photoinitiators, durch die Wahl der Intensität und der Dauer der UV-Aktivierung.

Nach dem Fügen der Werkstücke kann der Klebstoff, angepaßt an den Fertigungsablauf, bei Raumtemperatur bis zur Handfestigkeit gehärtet werden, so daß eine weitere Bearbeitung des soeben gebildeten Verbundes ohne extra Halterung, z.B. in einem automatisierten Prozeß, möglich ist.

Durch kurzzeitige Wärme, z.B. Infrarot-Wärmebehandlung kann die Fügeoffenzeit auch deutlich verkürzt und die Handfestigkeit somit erhöht werden. Die Endfestigkeit wird dann in einem nachgeschalteten thermischen Härtungsschritt erreicht.

Die Fügeoffenzeit eines derartigen Klebstoffes wird je nach Anforderung einfach durch die Konzentration an Initiator im Klebstoff, die Dauer und/oder die Intensität der UV-Bestrahlung und die Temperatur der Werkstücke, der Klebeschicht und/oder der Umgebung gesteuert.

Die einstellbaren Fügeoffenzeiten variieren dabei von einigen Sekunden bis zu mehreren Stunden.

Durch die eingearbeiteten Elastomerpartikel eignet sich der Klebstoff und das Verfahren auch zur Verbindung großflächiger Teile, z.B. auch massiver Werkstücke mit gegenläufigem thermischen Ausdehnungskoeffizienten.

Bevorzugt enthält der Klebstoff einen UV-Initiator auf Ferrocen-Salz-Basis, der in Abhängigkeit von der Konzentration, der Dauer und/oder Intensität der UV-Aktivierung eine Fügeoffenzeit zwischen 30 sec und 3 h bewirkt. Zudem enthält er vorzugsweise den epoxifunktionellen Siliconkautschuk in Form von Partikel, die eine überraschend hohe Elastizität der Klebeverbindung bewirken.

Zur vollständigen Aushärtung, wo teilweise ungenügend oder kein UV-Licht hinkommt, wie z.B. bei dicken Schichten und/oder Schattenbereichen, enthält der Klebstoff einen thermischen Initiator.

Der Bestandteil A des Klebstoffs ist ein cycloaliphatisches Epoxidharz, z.B. ein ringepoxidiertes Diepoxid wie der cycloaliphatische Diglycidylether in einer Menge von 5 bis 90 Gew%, bevorzugt von 5 bis 50 Gew% eingesetzt.

Die Komponente B ist ein epoxifunktioneller Siliconkautschuk und ist im Klebstoff in einer Menge von 10 bis 94 Gew%, bevorzugt von 50 - 90 Gew%, insbesondere von 70 - 90 Gew% enthalten. Der Siliconkautschuk wird durch die epoxyfunktionellen Gruppen in die Polymermatrix chemisch eingebaut. Ein Separieren dieser Partikel mit einer mittleren Korngröße von 0,1 - 3 µm ist daher ausgeschlossen.

Als Bestandteil C des Klebstoffs wird ein UV-Initiator auf Ferrocensalzbasis eingesetzt, der durch die UV-Bestrahlung photolytisch Säurekationen freisetzt, die die Epoxidpolymerisation katalysieren. Die Reaktionsgeschwindigkeit ist abhängig von deren Konzentration und der angewendeten Verarbeitungstemperatur. Bevorzugt wird Cyclopentadienylisopropylbenzol-Eisen(II)-hexafluorophosphat verwendet.

Bestandteil D des Klebstoffes ist ein thermischer Initiator z.B. auf Basis eines Thiolaniumsalzes, wie Benzylthiolaniumhexafluoroantimonat und Bestandteil E ein üblicher Haftvermittler, wie z.B. Glycidyloxypropyltrimethoxysilan.

Die weiteren Bestandteile F, G, H sind eine hochdisperse Kieselsäure, wie z.B. Aerosil, Keramik- oder Glaskugeln zur definierten Fügespalteinstellung und gängige Füllstoffe, wie z. B. Quarzmehl.

Der Klebstoff ist also nach dem dualen Prinzip härtbar: Angestoßen wird die Härtungsreaktion durch eine hinsichtlich Intensität und Dauer an die gewünschte Fügeoffenzeit abgestimmte UV-Bestrahlung. Mit einem anschließenden thermischen Härtungsprozeß wird die Endfestigkeit erreicht, insbesondere auch an den vom UV-Licht-abgeschatteten Bereichen.

Eine Klebeverbindung wird nach einer vorteilhaften Ausgestaltung des Verfahrens folgendermaßen ausgeführt: Eines und/oder beide der zu verbindenden Werkstücke wird/werden mit einer Klebstoffschicht versehen, vorzugsweise in einer Schichtdicke zwischen 10 und 500 µm. Die Klebstoffschicht wird mit UV-Licht, je nach erforderlicher Fügeoffenzeit, 1 bis 60 sec bestrahlt. Bei einer Konzentration an UV-Initiator von 0,5 Gew% einer Intensität von 40 mW/cm² und einer Bestrahlungsdauer von 30 bis 60 sec stellt sich eine Fügeoffenzeit (d.h. die Zeitspanne in der der Klebstoff flüssig bleibt) von 1 bis 2 Stunden ein.

Die Fügeteile werden innerhalb der Fügeoffenzeit entsprechend einer Positionsvorgabe gefügt und ausgerichtet. Nach Ablauf der Fügeoffenzeit verfestigt sich der Klebstoff und erreicht bei den angegebenen Bestrahlungsdaten nach 3 Stunden eine brauchbare Handfestigkeit mit einer Scherfestigkeit von 2 N/mm², die es ermöglicht, den Verbund ohne Haltevorrichtungen weiter zu handhaben. Um dem Klebeverbund die maximale Festigkeit zu verleihen, wird eine thermische Nachhärtung vorgenommen.

Der im Klebstoff enthaltene thermische Initiator garantiert dabei nach 2 Stunden bei 150 °C ein vollständiges und gleichmäßiges Aushärten der Klebestelle.

Soll ein Verbund von mehr als zwei Werkstücken erzeugt werden, so können nach der Fixierung zumindest einer Klebestelle noch weitere Werkstücke angefügt und fixiert werden. Eine Fixiervorrichtung für die zuerst aufgebrachten Werkstücke kann entfallen. Auch bei Verklebungen auf stark geneigten, gekrümmten oder gar überhängenden Oberflächen ist die Fixierung durch UV-Bestrahlung möglich und nach entsprechender Fügeoffenzeit bzw. Handfestigkeit der verklebten Teile bleibt die relative Position der verklebten Werkstücke auch beim Aufheizen während der Härtungstemperatur unverändert. Die Fixierung ist auch dann ausreichend stabil und positionsgenau, wenn zusätzliche Kräfte auf die verklebten bzw. fixierten Werkstücke einwirken. Dieser Fall wird beispielsweise bei der Verklebung von Magneten beobachtet, die über kurze Abstände mit magnetischen Anziehungs- und Abstoßungskräften aufeinander einwirken.

Der Klebstoff und/oder die mit dem Verfahren unter Benutzung des Klebstoffs erzeugte Klebestelle zeigt nach erfolgter thermischer Nachhärtung eine Endfestigkeit von >3,5 N/mm², gemessen an einem großflächigen pulvermetallurgisch hergestellten Selten-Erd-Dauermagnetwerkstoff "VACODYM"/Eisen-Klebeverbund bei 150°C. Dieses Festigkeitsniveau wird auch nach mehrwöchiger Auslagerung bei 150°C gehalten. Ein so dargestellter Verbund eignet sich zur Verwendung im Temperaturbereich von -40 °C bis 180°C.

Der Klebstoff wird bei Raumtemperatur mittels Dispenser - oder Rakeltechnik in einer Schichtdicke von 10-500µm, bevorzugt von 70-150µm und insbesondere bevorzugt von 100 bis 125µm, unabhängig ob auf eines der Werkstücke oder auf beide Werkstücke, aufgetragen.

Zur Einstellung eines definierten Fügespaltes hat sich die Zugabe von Abstandshaltern wie z.B. Glaskugeln als vorteilhaft erwiesen. Ganz besonders praktisch ist dabei die Verwendung von Glaskugeln mit einem Durchmesser, der der angestrebten Größe des Fügespaltes entspricht. Beispielsweise kann mit der Zugabe von Glas- und/oder Keramikkugeln mit einem Durchmesser von 100-125µm eine Schichtdicke der Klebstoffschicht und ein Fügespalt von dieser Größenordnung hergestellt werden.

Die Glas- und/oder Keramikkugeln können in den Klebstoff vor dessen Aufbringung auf eines der Werkstücke eingearbeitet werden oder auf das fertig aufgebrachte Klebstoffbett auf dem Werkstück während der Fügeoffenzeit aufgestreut werden.

Der Anteil von Abstandshaltern im Klebstoff beträgt vorteilhafterweise 0,5 bis 5 Gew%. Als besonders vorteilhaft hat sich ein Anteil von 0,75 bis 3 und insbesondere von ca. 1 Gew%, bezogen auf die gesamte Klebstoffmasse, erwiesen.

Das Klebeverfahren eignet sich für die Verbindung einer Vielzahl unterschiedlichster Substrate. Insbesondere die Verklebung eines Dauermagnetelements mit einem ferromagnetischen Material, wie z.B. einem Eisenpol, bestehend aus einem massiven Block oder einem geschichteten Blechstapel, in einer elektrischen Maschine ist ein Einsatzgebiet der Erfindung. Aber auch auf Glas, Kunststoff, Keramik und Metall wird eine hohe Haftfestigkeit erzielt.

Im folgenden wird der Klebstoff anhand eines Ausführungsbeispiels näher erläutert (alle Komponenten sind einzeln im Handel erhältlich):
A) 10,0 g 3,4-Epoxicyclohexylmethyl-(3,4-epoxi)cyclohexancarboxylat
B) 87,5 g Silicon-elastomermodifizierten Epoxidharzes
C) 0,5 g Cyclopentadienylisopropylbenzol-Eisen(II)-hexafluorophosphats
D) 1,5 g S-Benzylthiolanium-hexafluoroantimonats
E) 0,5 g Glycidyloxypropyltrimethoxysilan
F) 0,5 g hochdisperse Kieselsäure
G) 1,0 g Glaskugeln
H) 12 g Quarzmehl

Das erfindungsgemäße Klebeverfahren bietet den Vorteil, Fügeverbindungen ohne aufwendige Haltevorrichtungen kontinuierlich durchzuführen. Die Parameter für die Fügeoffenzeit, einstellbar über die Art des UV-Initiators, die Konzentration des Uv-Initiators, die Dauer und/oder Intensität der UV-Aktivierung, sind so zu wählen, daß sich die Einstellung der Handfestigkeit in den gewünschten Fertigungsdurchlauf einfügt und die weitere Handhabung der zu verklebenden Werkstücke ohne zusätzliche Halterungen vornehmen läßt.

Von Vorteil ist bei dem Inititatorsystem des erfindungsgemäßen Klebers, daß sowohl der Photoinitiator als auch der thermische Initiator eine kationische Polymerisation auslösen, d. h. daß die Härtung des Klebstoffs ein einheitliches, stress freies Netzwerk liefert. Ein weiterer Vorteil ist, daß die thermische Härtung unabhängig vom Zeitpunkt nach der UV-Aktivierung vorgenommen werden kann. Erhalten wird immer die gleiche Endfestigkeit, egal ob ein Fügeoffenzeit von 1 Minute oder 3 Stunden bzw. selbst eine Lagerung über 3 Tage vorliegt.

## Patentansprüche

1. Einkomponentiger Klebstoff, folgende Bestandteile umfassend:
A) 5 - 90 Gew% einer cycloaliphatischen Epoxidharzkomponente
B) 10 - 94 Gew% eines epoxifunktionellen Siliconkautschuks,
C) 0,05 bis 5 Gew% eines UV-Initiators auf Ferrocenbasis,
D) 0,1 - 5 Gew% eines thermischen Initiators
E) 0,05 - 1,5 Gew% eines Haftvermittlers,
F) 0,1 - 10 Gew% einer hochdispersen Kieselsäure,
G) 0 - 3 Gew% Abstandshalter und
H) 0 - 70 Gew% Füllstoff.

2. Klebstoff nach Anspruch 1, bei dem die Komponente C Cyclopentadienylisopropylbenzol-Eisen(II)-hexafluorophosphat ist.

3. Klebstoff nach einem der Ansprüche 1 oder 2, bei dem der thermische Initiator (Komponente D) Benzylthiolaniumhexafluoroantimonat ist.

4. Verwendung des Klebstoffs nach einem der Ansprüche 1 bis 3 zur Verklebung großflächiger Fügeteile mit gegenläufigem Ausdehnungskoeffizienten.

5. Verfahren zur flächigen Verklebung zweier Werkstücke, folgende Arbeitsschritte umfassend:
- Aufbringen einer Schicht des Klebstoffs nach einem der Ansprüche 1 oder 2 auf eines der beiden Werkstücke oder beide Werkstücke,
- Einstellung der gewünschten Fügeoffenzeit des Klebstoffs durch, hinsichtlich ihrer Dauer und Intensität, gezielte UV-Bestrahlung und/oder Temperierung und/oder IR-Bestrahlung zur Positionsfixierung und
- Zusammenfügen der beiden Werkstücke,
- thermische Nachhärtung des Klebstoffs.

6. Verfahren nach Anspruch 5, bei dem vor dem thermischen Aushärten durch Wiederholung der ersten drei Schritte des Verfahrens zumindest ein weiteres Werkstück an die ersten beiden Werkstücke angefügt und fixiert wird.

7. Verfahren nach einem der Ansprüche 5 oder 6, bei dem zumindest eines der Werkstücke massiv ist.

8. Geklebter Verbund zumindest zweier Werkstücke, der mit dem Klebstoff nach einem der Ansprüche 1 oder 2 und/oder nach dem Verfahren nach einem der Ansprüche 5 bis 7 verbunden ist.

9. Verbund nach Anspruch 8, bei dem Werkstücke aus einem Magnetwerkstoff mit einem metallischen Träger verbunden sind.

10. Verwendung eines Verbundes nach einem der Ansprüche 8 oder 9 im Temperaturbereich von -40°C bis 180 °C.

## Claims

1. A one-component adhesive comprising the following constituents:
A) 5-90% by weight of a cycloaliphatic epoxy resin component,
B) 10-94% by weight of an epoxy-functional silicone rubber,
C) 0.05-5% by weight of a ferrocene-based UV initiator,
D) 0.1-5% by weight of a thermal initiator,
E) 0.05-1.5% by weight of an adhesion promoter,
F) 0.1-10% by weight of a highly disperse silica,
G) 0-3% by weight of spacers, and
H) 0-70% by weight of filler.

2. Adhesive according to Claim 1, wherein component C is cyclopentadienylisopropylbenzeneiron(II) hexafluorophosphate.

3. Adhesive according to one of Claims 1 or 2, wherein the thermal initiator (component D) is benzylthiolanium hexafluoroantimonate.

4. The use of the adhesive according to one of Claims 1 to 3, for adhesively bonding adherends of large surface area having opposite expansion coefficients.

5. Method of two-dimensionally adhesively bonding two workpieces, which comprises the following steps:
- applying a film of the adhesive according to one of Claims 1 or 2 to one of the two workpieces or to both workpieces,
- setting the desired open joint time of the adhesive by duration- and intensity-specific UV irradiation and/or heat treatment and/or IR irradiation, for the purpose of positional fixing, and
- joining the two workpieces,
- thermally aftercuring the adhesive.

6. Method according to Claim 5, wherein at least one further workpiece is attached to the first two workpieces and fixed before thermal curing, by repeating the first three steps of the method.

7. Method according to one of Claims 5 or 6, in which at least one of the workpieces is solid.

8. Adhesively bonded assembly of at least two workpieces joined with the adhesive according to one of Claims 1 or 2 and/or by the method according to one of Claims 5 to 7.

9. Assembly according to Claim 8, wherein workpieces comprising a magnetic material are joined to a metallic substrate.

10. The use of an assembly according to one of Claims 8 or 9 in the temperature range from -40°C to 180°C.

## Revendications

1. Adhésif monocomposant comprenant les éléments constitutifs suivants :
A) de 5 à 90 % en poids d'un constituant de résine époxyde cycloaliphatique,
B) de 10 à 94 % en poids d'un caoutchouc de silicone à fonctionnalité époxy,
C) de 0,05 à 5 % en poids d'un amorceur UV à base de ferrocène,
D) de 0,1 à 5 % en poids d'un amorceur thermique,
E) de 0,05 à 1,5 % en poids d'un agent d'accrochage,
F) de 0,1 à 10 % en poids d'un acide silicique très dispersé,
G) de 0 à 3 % en poids d'un agent d'entretoisement et
H) de 0 à 70 % de charge.

2. Adhésif suivant la revendication 1, dans lequel le constituant C est de l'hexafluorophosphate de cyclopentadiénylisopropylbenzène-fer(ll).

3. Adhésif suivant l'une des revendications 1 ou 2, dans lequel l'amorceur thermique (constituant D) est de l'hexafluoroantimonate de benzylthiolanium.

4. Utilisation de l'adhésif suivant l'une des revendications 1 à 3 pour coller des parties de joint de grande surface ayant des coefficients de dilatation opposés.

5. Procédé de collage à plat de deux pièces comprenant les stades opératoires suivants :
- dépôt d'une couche de l'adhésif suivant l'une des revendications 1 ou 2 sur l'une des deux pièces ou sur les deux pièces,
- réglage de la durée d'ouverture de jointoiement souhaitée de l'adhésif par, pour ce qui concerne sa durée et son intensité, une exposition ciblée aux UV et/ou une mise en température et/ou une exposition aux IR pour l'immobilisation en position et
- jointoiement des deux pièces,
- post-durcissement thermique de l'adhésif.

6. Procédé suivant la revendication 5, dans lequel avant le durcissement thermique, on joint et on immobilise au moins une autre pièce à la première des deux pièces par répétition des trois premiers stades du procédé.

7. Procédé suivant l'une des revendications 5 ou 6, dans lequel au moins l'une des pièces est une pièce pleine.

8. Composite collé d'au moins deux pièces, qui est relié par l'adhésif suivant l'une des revendications 1 ou 2 et/ou par le procédé suivant l'une des revendications 5 à 7.

9. Composite suivant la revendication 8, dans lequel des pièces en un matériau pour aimant sont reliées à un support métallique.

10. Utilisation d'un composite suivant l'une des revendications 8 ou 9 dans le domaine de températures allant de -40°C à 180°C.
